# EUROPEAN PATENT APPLICATION

(11) **EP 2 480 049 A2**
(43) Date of publication of application: **25.07.2012**
(21) Application number: 12150027.6
(22) Date of filing: 02.01.2012
(51) Int. Cl.: H05B 33/08, H02M 3/335

(54) **Power supply device for light sources**

(30) Priority: 20.01.2011 IT TO20110041
(71) Applicant: OSRAM AG, 81543 München (DE); OSRAM S.P.A. - SOCIETA' RIUNITE OSRAM EDISON CLERICI, 20126 Milano (IT)
(72) Inventor: Angelin, Francesco, 31021 Mogliano Veneto (Treviso) (IT); Luccato, Daniele, 31029 Vittorio Veneto (Treviso) (IT)
(74) Representative: Bosotti, Luciano

(57) **Abstract**

An electrical power supply device (10), for example for LED light sources, includes a transformer (T) operating in flyback mode, with a primary winding (P) having coupled thereto a main switch (Qp) switchable on and off to connect and disconnect said primary winding (P) of the transformer from a supply source (V) and a secondary winding (S) having coupled therewith a main branch (D_{MAIN}, C_{MAIN}) for feeding a load (L) and at least one auxiliary branch (D_{AUX}, Q_{AUX}) to provide an auxiliary power supply (Aux supply).
The or each auxiliary branch (D_{AUX}, Q_{AUX}) includes a switching regulator (Q_{AUX}) with hysteresis with a respective auxiliary switch (Q_{AUX}) sensitive to the voltage on said secondary winding (S) and the voltage of said auxiliary power supply (Aux supply). Said auxiliary switch (Q_{AUX}) is configured for closing to draw current from said main branch (D_{MAIN}, C_{MAIN}) towards said auxiliary power supply (Aux supply) in the presence of a negative transition of the voltage on said secondary winding (S) and for opening when the voltage on said auxiliary power supply (Aux supply) reaches a given upper level (V_{REF}).

## Description

### Technical field

The present disclosure relates to electrical power supply devices.

In various embodiments, the description may refer to the field of isolated switching converters, particularly in a flyback topology.

In various embodiments, the description may refer to generating multiple synchronous outputs from the same transformer winding.

In various embodiments, the description may refer to solutions adapted for example to supply light sources, such as LED light sources.

### Technological background

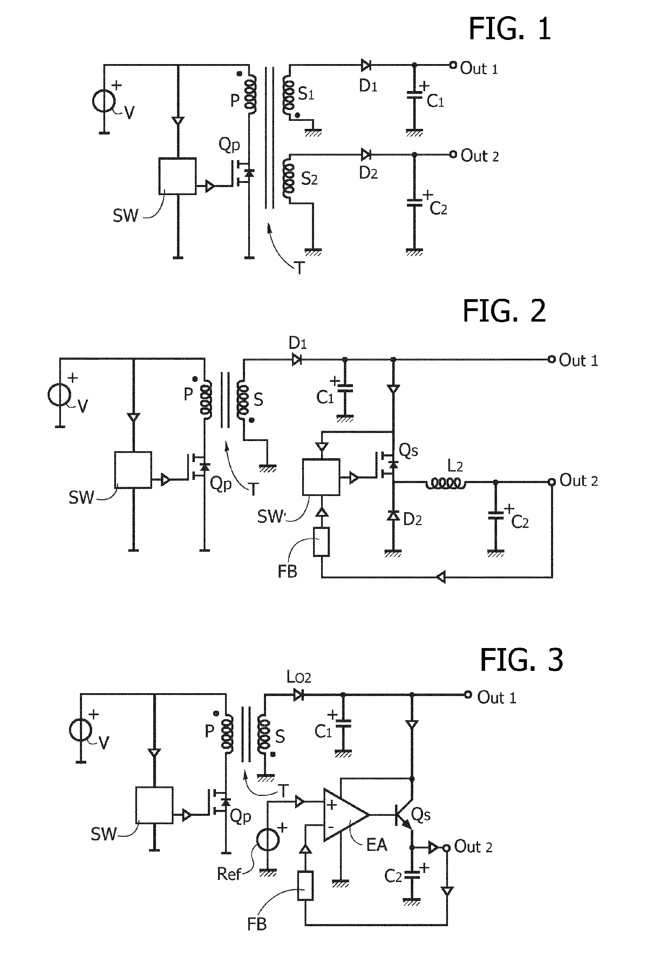

Figures 1 to 3 show various solutions of electrical power supply devices, adapted to obtain multiple outputs resorting to a flyback topology.

The three diagrams of Figures 1 to 3 refer to solutions wherein a transformer T is provided having a primary winding P, supplied from a supply source V via an electronic switch Qp (typically a mosfet) which is switchable alternatively on and off by a regulator SW.

Such basic arrangement, recalled by way of reference example, is kept for the primary side of the device in all embodiments presently considered by way of non limiting example only.

In the diagram of Figure 1, transformer T is provided with a plurality of secondary windings, in the presently considered example two windings S1, S2. Each secondary winding S1, S2 generates, via a rectifying/filtering network comprised of a diode D1, D2, ... and of a capacitor C1, C2, ..., a respective output Out1, Out2, ....

This way to obtain multiple outputs has several drawbacks.

First of all transformer T, in itself a critical component, tends to become bulkier and to operate less and less ideally, being moreover costlier. In addition, the number of connection pins increases, which in turn worsens the insulation performance.

Moreover, the fact that the ratio among various output voltages is ideally constant (as it depends on the number of turns of the various secondary windings S1, S2, etc.) means on the one hand that it is impossible to adjust one output voltage without varying the others, and on the other hand that the cross regulation is spoilt by the transformer's parasitics and the other circuit elements, therefore making the output voltage ratios dependent on load, frequency, temperature and other operating parameters.

The solution according to Figure 2 has on the contrary one single secondary winding S and derives the auxiliary output(s) (output Out2 in the presently considered example) from main output Out1 through a regulator of the switching type, comprising an electronic switch (once again typically a mosfet) Qs driven by a related regulator SW' .

This solution is energy-efficient from the point of view of energy use, but requires a number of additional components, including regulator SW', a really efficient switch on the high side (i.e. Qs), an output inductor L2 and a recirculating diode D2, to recirculate the current when switch Qs is open and, usually, a feedback network FB to drive regulator SW' according to output voltage Out2.

It is therefore an expensive solution which is quite space consuming, especially considering its use for generating a low power auxiliary supply.

The solution in Figure 2 can however be implemented in a simplified design, as schematically depicted in Figure 3: in this case as a switch Qs of the auxiliary circuit, a bipolar pass transistor or mosfet is used, which however no longer operates as a switch but as a linear regulator, driven by an error amplifier EA which drives transistor Qs according to the difference between a reference voltage Ref and the feedback voltage supplied by network FB.

This solution is simple and easy to implement with few components, but has the drawback of a high dissipation of transistor Qs (which works in the linear operation region), consequently limiting the possible applications to cases wherein the voltage drop and the current supplied at the output have low values.

### Object and summary

The object of the invention is to propose a solution to the drawbacks of the previously outlined arrangements.

According to the invention, such an object is achieved through a device having the features specifically set forth in the claims that follow.

The claims are an integral part of the technical teaching of the invention provided herein.

In various embodiments, the same secondary winding can supply multiple voltage-regulated outputs.

In various embodiments, the derived outputs can be regulated independently one from the other.

In various embodiments, it is possible to avoid resorting to a linear passive regulator.

In various embodiments, the number of components in each auxiliary regulator can be remarkably lower as compared to a complete buck regulator.

In various embodiments, an improved efficiency can be achieved by operating in ZVS (Zero Voltage Switching) conditions.

In various embodiments, as regards the pulse generation, the or each auxiliary regulator is intrinsically synchronous with the main switch, unlike the case of a buck converter (see for example Figure 2).

In various embodiments, wherein the generation of multiple auxiliary outputs is provided, it is possible to share a few parts of the circuit among multiple regulators, therefore decreasing the overall number of components; this is not possible in a traditional buck implementation.

### Brief description of the figures

The invention will now be described, by way of non-limiting example only, with reference to the enclosed views, wherein:
- Figures 1 to 3 have already been described in the foregoing,
- Figure 4 is a block diagram of an embodiment,
- Figure 5 is a block diagram of an embodiment,
   and
- Figure 6 is an implementation diagram of an embodiment.

### Detailed description

In the following description, numerous specific details are given to provide a thorough understanding of embodiments. The embodiments can be practiced without one or several specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

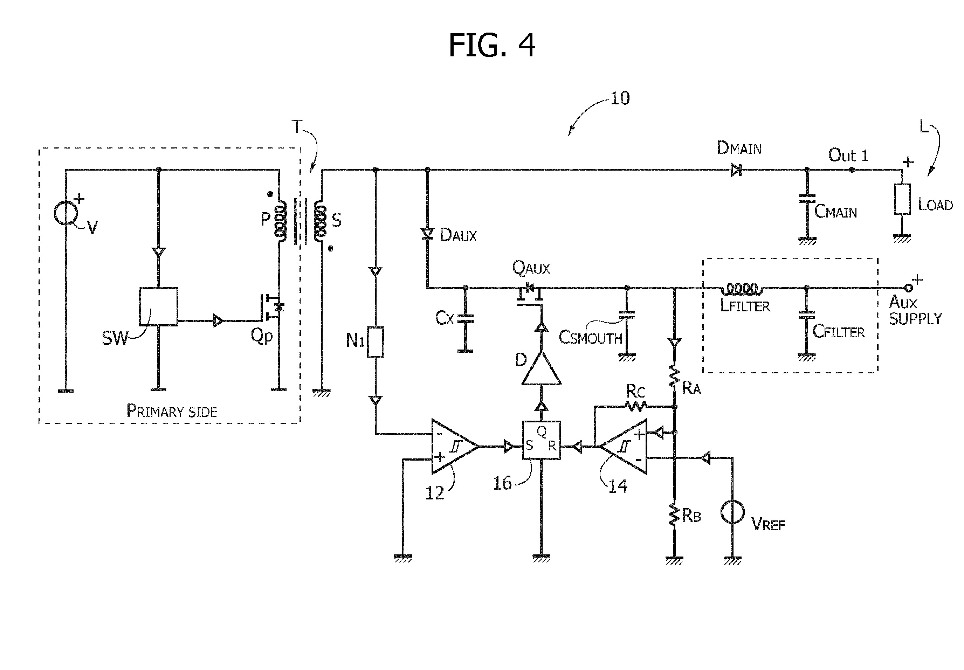

In Figures 4, 5 and 6 reference 10 denotes in general a supply device, adapted to supply, from an input voltage V, a load L, for example comprised of a light source, such as a LED light source. In various embodiments, load L can be comprised of a so called LED string.

It will be noted however that, although being shown in some of the figures, load L does not belong in itself to device 10.

Device 10 in Figures 4, 5 and 6 has the same general design as in the previously described diagrams of Figures 1 to 3. Specifically, in all three embodiments referred to, by way of example and not limitation, in Figures 4 to 6, the primary side of device 10 can be the same as described with reference to Figures 1 to 3. For this reason parts, elements and components which are identical or equivalent to parts, elements and components already described with reference to Figures 1 to 3 are denoted in Figures 4 to 6 with the same reference numbers, and the description of such parts, elements and components will not be repeated in the following for the sake of brevity.

In the three diagrams of Figures 4, 5 and 6 the secondary side of device 10 comprises a main branch adapted to supply a load L with an output voltage Out1.

This takes place according to criteria known in themselves, which do not therefore require a detailed explanation in the following. For this reason, in all the diagrams in Figures 4, 5 and 6 said main branch is shown simply as a rectifying (diode D_{MAIN}) and filtering (capacitor C_{MAIN}) network, supplied directly from secondary winding S of transformer T, operating in a flyback mode.

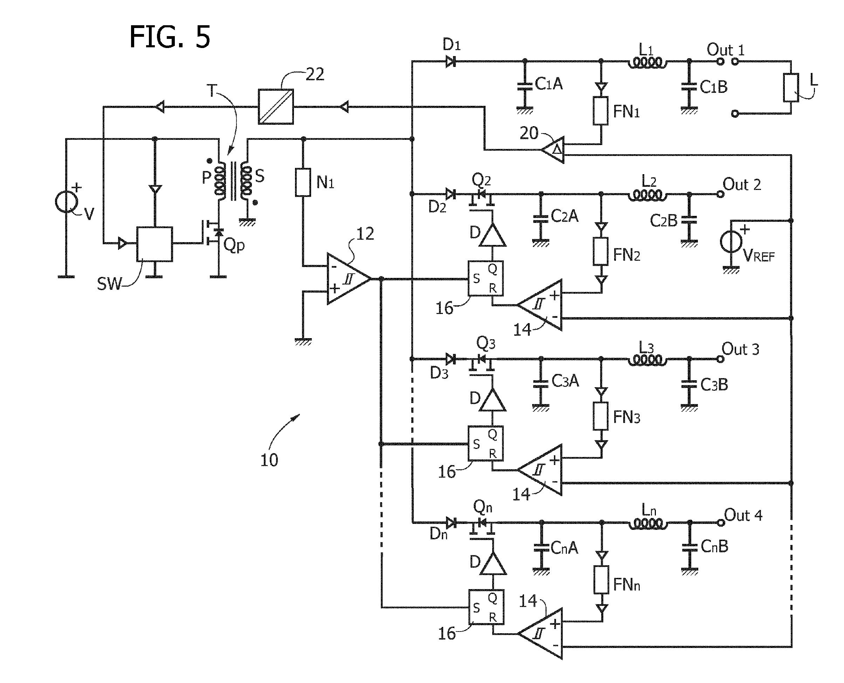

As will be better understood in the following, the diagram in Figure 5 highlights the possibility, in various embodiments, of having a plurality of outputs implemented substantially in the same way, although they may have mutually different features (for example as regards voltage).

In this case, the components of the main branch have not been identified with suffix MAIN, but simply with reference number 1, providing therefore the presence of a rectifying (diode D1) / filtering (capacitor C1A) network.

The diagram in Figure 4 refers to embodiments wherein the output consists of the main output Out1 and in addition of a single auxiliary supply output (Aux supply).

Various embodiments may have, on the secondary side of circuit 10, a secondary or auxiliary rectifier D_{AUX}, the anode whereof is connected to the anode of main rectifier D_{MAIN}, with the consequent ability to shunt (according to criteria better explained in the following) current from the input line which goes towards main output Out1.

Downstream secondary rectifier D_{AUX} there is provided an electronic switch Q_{AUX} (typically a mosfet, such as mosfet n) driven by a driver D.

The current shunted by auxiliary rectifier D_{AUX} and auxiliary switch Q_{AUX} is sent towards a capacitor C_{SMOOTH}, across which the voltage Aux supply is present.

In various embodiments, voltage Aux supply may be the output of a low pass filter LC, optionally arranged in cascade connection with capacitor C_{SMOOTH}, with the function of an antinoise filter, such filter being comprised of an inductor L_{FILTER} and a capacitor C_{FILTER}.

In various embodiments, downstream diode D_{AUX} and upstream switch Q_{AUX} there can be provided a capacitor C_{X} which, although eliminating the ZVS condition, is adapted to improve the circuit efficiency by decreasing the opening current of switch Q_{AUX}, with the further result of reducing EMI problems.

In the present embodiment, illustrated by way of example only, reference 12 denotes a comparator, the non-inverting input whereof being connected to ground and the inverting input being connected to secondary winding S of transformer T via a network N1 of a proportional or derivative type.

The unit comprised of comparator 12 and network N1 is adapted to sense that the voltage on secondary winding S of transformer T has experienced a down-going transition (for example that it has become negative).

Reference 14 on the other hand denotes another comparator, which is adapted to compare the auxiliary output voltage Aux supply (for example the voltage across capacitor C_{SMOOTH}), downscaled via a resistive voltage divider R_{A} and R_{B}, to a reference voltage V_{REF}.

Reference R_{C} denotes a resistor, connected between the non-inverting input and the output of comparator 14, in such a way as to induce into comparator 14 itself a hysteretic behavior.

Finally, reference 16 denotes a latch circuit, adapted to drive (through driver D) auxiliary switch Q_{AUX}, on the basis of the output signals of both comparators 12 and 14.

The described circuit implements a hysteretic switching regulator, wherein auxiliary switch Q_{AUX} is closed (i.e. made conductive) when the voltage on secondary winding S is negative or experiences a sudden down-going transition. Thereafter switch Q_{AUX} is opened again when the output voltage becomes higher than the preset value represented by value V_{REF} (and/or by the division ratio of divider R_{A}, R_{B}).

As has already been stated, Figure 5 shows the possibility to extend the solution shown in Figure 4 to the generation of a general number n of output signals Out1, Out2, ..., whereof the first (or any other chosen output) may constitute the main output, adapted to supply load L.

In the diagram of Figure 5, in each of the auxiliary branches there is provided a respective latch circuit 16, with driver D of the auxiliary switch associated therewith, in this case denoted by Q2, Q3, ..., Qn, while the corresponding auxiliary rectifier is denoted by reference D2, D3, ..., Dn.

Figure 5 shows that, in implementing such a "multiple" solution, it is possible to have all auxiliary branches, adapted to generate output voltages Out2, Out3, ..., Outn, share the same comparator 12 and the same network N1.

The smoothing capacitor (C_{SMOOTH} in Figure 4) is denoted in the diagram of Figure 5 as C2A, C3A, ..., CnA.

In a similar way, components LC of the output filter (if present) are denoted as L2, L3, ..., Ln and C2B, C3B, ..., CnB.

From the same diagram of Figure 5 it is clear that auxiliary branches can also share the same reference voltage V_{REF}, as a function of the comparing operation performed in comparator 14, with the voltage drawn from the output (divider R_{A}, R_{B} of Figure 4, denoted in general as FN2, FN3, ..., FNn in Figure 5).

In order to highlight the overall symmetry with auxiliary branches, in Figure 5 rectifier D_{MAIN} of the main branch is denoted by D1, while capacitor C_{MAIN} and components LC of the output filter are denoted respectively by C1A, L1 and C1B. For the same reason, the network sensing the output voltage is denoted in Figure 5, referring to the main branch, by FN1.

It will be noted moreover that in the diagram of Figure 5 the result of the comparison between voltage V_{REF} and the output voltage of network FN1 is used in the main branch by a comparator 20 performing, for example through an opto-isolator 22, a feedback function towards regulator SW, provided on the primary side of the device. The performance criteria of such a feedback regulating operation are well known in the state of the art and therefore do not require a detailed description in the following.

The operation of the embodiments of Figure 4 or Figure 5 may be described as follows, by referring to a continuous operation with steady-state (i.e. non transient) voltage levels. Moreover, it is to be noted that in any case the voltages drawn on the auxiliary outputs Aux Supply or Out2, Out3, ..., Outn are lower than (or at most virtually equal to) the voltage of main output Out1.

When the voltage on secondary winding S becomes negative (or in general undergoes a rapid transition in the negative direction) because switch Qp on the side of the primary winding has closed, or because the primary circuit in a free self-oscillation period, comparator 12 undergoes a transition, which controls latch 16 to close auxiliary switch Q_{AUX} (or Q2, Q3, ..., Qn in the case of Figure 5).

At this point there is no current flowing towards capacitor C_{SMOOTH} (C2A, C3A, ..., CnA in the diagram of Figure 5). This is due to the fact that diode D_{AUX} (D2, D3, ..., Dn in the diagram of Figure 5) stays open. Therefore, closing the auxiliary switch takes place in a condition of zero voltage and current.

However, when main switch Qp opens, the voltage on the secondary winding changes polarity and diode D_{AUX} (D2, D3, ..., Dn in the case of Figure 5 embodiment) starts conducting, so that the current coming from secondary winding S starts to charge capacitor C_{SMOOTH} (C2A, C3A, ..., CnA in the diagram of Figure 5) through transistor Q_{AUX} (Q2, Q3, ..., Qn in the diagram of Figure 5).

The capacitance value is chosen on the basis of the voltage ripple allowed for that auxiliary output, whence a corresponding dv/dt value is derived according to the current pumped into the capacitor.

Main rectifier D_{MAIN} (or D1 in the diagram of Figure 5) stays open because the voltage on the main output is higher than the one on C_{SMOOTH} (C2A, C3A, ..., CnA). Secondary winding S works therefore as a current generator the voltage whereof is actually clamped by C_{SMOOTH} (C2A, C3A, ..., CnA in the diagram of Figure 5).

When the output voltage (Aux Supply or Out2, Out3, ..., Outn - i.e. in practice the voltage across capacitor C_{SMOOTH}, C2A, C3A, ..., CnA) exceeds the set threshold on comparator 14, the same comparator acts on latch circuit 16, which turns off, i.e. opens, switch Q_{AUX}, Q2, Q3, ..., Qn.

Now the voltage on secondary winding S rises until main diode D_{MAIN} or D1 starts conducting, so that the current of the winding flows towards the output capacitor (C or C1A) and towards load L. At the same time, capacitor C_{SMOOTH} or C2A, C3A, ..., CnA starts discharging, supplying the current towards the respective auxiliary output.

In case the voltage on capacitor C_{SMOOTH} (C2A, C3A, ..., CnA) does not reach the desired threshold in a single switching cycle, switch Q_{AUX}, Q2, Q3, ..., Qn stays closed for several cycles, until the threshold is reached.

In case a fixed hysteresis is employed for comparator 14 and if latch circuit 16 is of the reset predominant type, internal auxiliary switch Q_{AUX}, Q2, Q3, ..., Qn can stay open for several cycles, until the lower threshold level is reached.

On the contrary, by sizing the parts so as to ensure in any case that also auxiliary switch Q_{AUX} closes at every closing cycle of main switch Q_{P}, the effect is obtained of reducing, when Q_{P} opens, the voltage at secondary winding S to value Out_{AUX}: in this way the voltage reflected in the primary P is decreased as well, reducing the problem of an extra voltage at the opening due to the dispersed inductance of transformer T.

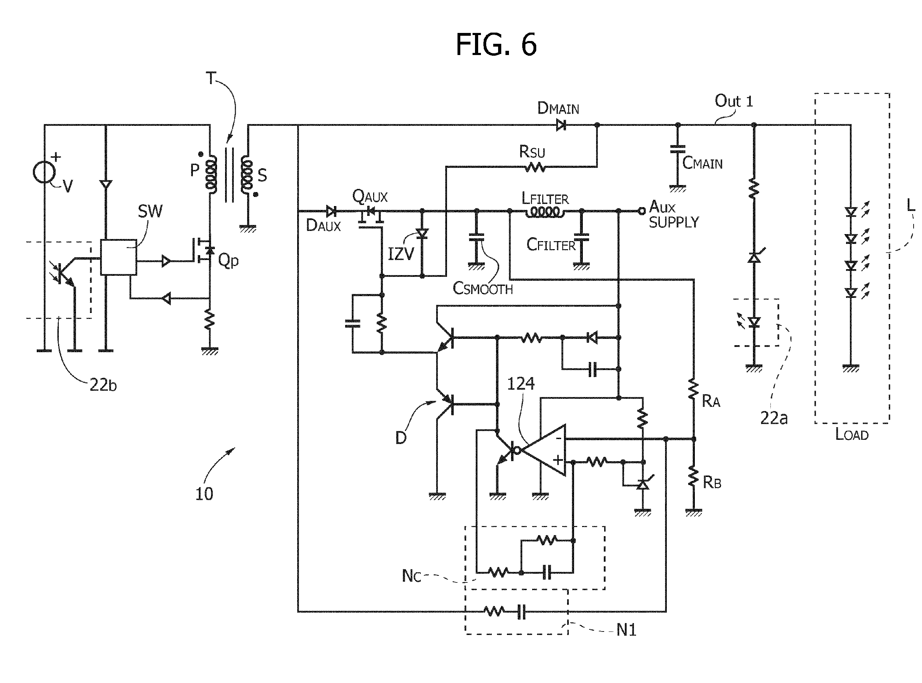

The diagram of Figure 6 (wherein parts, elements and components which are equal or equivalent to those already described before are denoted by the same references, and will not be described again) shows the structure of opto-isolator 22, comprising a "transmitting" part 22a, coupled to load L, and a "receiving" part 22b, which acts on regulator SW.

To this respect we highlight the possibility to implement the circuit functions previously described with specific reference to capacitors 12 and 14 and to latch 16 by resorting to one single comparator 124 implementing the various logic functions shown in Figure 4.

The function of logical latch is implemented by a derivative network N1, connected to secondary winding S of transformer T, and by a hysteresis network N_{C} around comparator 124. The function of driving auxiliary switch Q_{AUX} is achieved thanks to a level-shifted BJT voltage follower D, with a start-up resistor Rₛᵤ from the main output. It will be appreciated that the whole circuit of Figure 6 can be supplied with the drawn auxiliary voltage Aux supply itself.

Of course, without prejudice to the underlying principle of the invention, the details and the embodiments may vary, even appreciably, with respect to what has been described by way of example only, without departing from the scope of the invention as defined by the annexed claims.

## Claims

1. An electrical power supply device (10) including a transformer (T) with a primary winding (P) having coupled thereto a main switch (Qp) switchable on and off to connect and disconnect said primary winding (P) from a supply source (V) and a secondary winding (S) having coupled therewith a main branch (D_{MAIN}, C_{MAIN}) for feeding a load (L) and at least one auxiliary branch (D_{AUX}, Q_{AUX}) to provide an auxiliary power supply (Aux supply),
**characterized in that** said at least one auxiliary branch (D_{AUX}, Q_{AUX}) includes a switching regulator (Q_{AUX}) with hysteresis with a respective auxiliary switch (Q_{AUX}) sensitive to the voltage on said secondary winding (S) and the voltage of said auxiliary power supply (Aux supply), said auxiliary switch (Q_{AUX}) configured for closing to draw current from said main branch (D_{MAIN}, C_{MAIN}) toward said auxiliary power supply (Aux supply) in the presence of a negative transition of the voltage on said secondary winding (S) and for opening when the voltage on said auxiliary power supply (Aux supply) reaches an upper reference level (V_{REF}).

2. The device of claim 1, wherein between said secondary winding (S) and said auxiliary switch (Q_{AUX}) of said at least one auxiliary branch there are interposed a proportional or derivative network (N1) and a transition comparator (12) to detect said negative transition of the voltage on said secondary winding (S) of said transformer (T).

3. The device of claim 1 or claim 2, wherein between said auxiliary power supply (Aux supply) and said auxiliary switch (Q_{AUX}) in said at least one auxiliary branch there is interposed a comparator (14) with hysteresis (R_{C}) sensitive to the voltage on said auxiliary power supply (Aux supply).

4. The device of claim 2 and claim 3, wherein between said transition comparator (12) and said hysteresis comparator (14), on the one side, and said auxiliary switch (Q_{AUX}), on the other side, there is interposed a latch circuit (16).

5. The device of claim 2 and claim 3, including a single comparator (124) acting both as said transition comparator and said hysteresis comparator.

6. The device of any of the previous claims, wherein between said auxiliary secondary winding (S) and said auxiliary switch (Q_{AUX}) there is interposed a diode (D_{AUX}) which becomes conductive when said primary switch (Qp) opens thus producing an inversion of the polarity of the voltage on said secondary winding (S).

7. The device of claim 2, including a plurality of auxiliary branches (D2, Q2; D3, Q3;...; Dn, Qn) each to provide a respective auxiliary power supply (Out2, Out3, ..., Outn) and wherein a single said transition comparator (12) is provided common to all the auxiliary branches in said plurality.

8. The device of claim 2 or claim 7, including a plurality of auxiliary branches (D2, Q2; D3, Q3;...; Dn, Qn) each to provide a respective auxiliary power supply (Out2, Out3, ..., Outn) and wherein each said auxiliary branch includes a respective hysteresis comparator (14) co-operating with a single source of said upper reference level (V_{REF}) common to all the auxiliary branches of said plurality.

9. The device of any of the previous claims, wherein said main switch (Qp) and said auxiliary switch (Q_{AUX}) are electronic switches such as mosfets.

10. The device of any of the previous claims, wherein said load (L) is a lighting source such as a LED lighting source.
